# EUROPEAN PATENT APPLICATION

(11) **EP 2 075 542 A2**
(43) Date of publication of application: **01.07.2009**
(21) Application number: 08020331.8
(22) Date of filing: 21.11.2008
(51) Int. Cl.: G01C 21/36, B60K 35/00, G06F 3/14

(54) **Multi-screen display device and program of the same**

(30) Priority: 26.12.2007 JP 2007333809
(71) Applicant: Aisin AW Co., Ltd., Fujii-cho Anjo-shi, Aichi 444-1192 (JP)
(72) Inventor: Hayatoma, Takeo, Okazaki-shi Aichi 444-8564 (JP)
(74) Representative: Kramer - Barske - Schmidtchen

(57) **Abstract**

The multi display screen is constituted of a wide-screen displaying simultaneously two or more of a navigation search control screen setting necessary requirements to search for a route from a place of departure to a destination of a vehicle, a navigation map screen displaying the position of the vehicle on a map, a night vision screen recognizing an object on a road at night by infrared, a back guide monitor screen for recognizing a rear side of the vehicle, a blind corner monitor screen for recognizing an orthogonal direction of the vehicle, and a hands-free transmission/reception screen of a car phone. Screens to be displayed on the multi-display screen constituted of the wide screen is selected according to a vehicle driving state detected in a vehicle driving state detecting unit, and a display on the multi-display screen of a "screen 1", a "screen 2", and a "screen 3" constituted of the wide screen is determined according to the vehicle driving state detected in the vehicle driving state detecting unit.

## Description

### BACKGROUND OF THE INVENTION

### 1. Field of the Invention

The present invention relates to a multi-screen display device displaying a search screen for displaying a search condition to search for a route between a place of departure and a destination and setting a necessary requirement in a navigation device for mounting in a vehicle as well as a map screen for navigation displaying a map for route guidance, a night vision screen, and a back guide monitor screen, and to a program thereof.

### 2. Description of the Related Art

As a conventional multi-screen display device, there is one described in Japanese Patent Application Publication No. JP-A-2004-361457.
The multi-screen display device described in Japanese Patent Application Publication No. JP-A-2004-361457, in which one display screen is divided and different image signals can be displayed respectively on the divided display areas, includes a failure detection unit detecting occurrence of a display failure in the divided display areas, and a control unit displaying the image signals in other display areas when the failure detection unit detects occurrence of a display failure in part of the divided display areas.

Accordingly, when dividing the screen of a liquid display device into a plurality of display areas and displaying different image signals respectively on the divided areas, it does not happen that when a display failure occurs in one display area the other display areas become unable to display. Further, an image signal with a high level of importance, such as an instrumental signal of the vehicle, can be displayed securely, and the influence of a display failure is minimized.

### SUMMARY OF THE INVENTION

The technique of Japanese Patent Application Publication No. JP-A-2004-361457 is such that, in the multi-screen display device in which one display screen is divided and different image signals can be displayed respectively on the respective divided display areas, a failure detection unit detecting occurrence of a failure in the divided display areas is provided, and when a display failure occurs in part of the display areas, control is performed to display an image signal thereof in another display area. It can display an image signal with a high level of importance securely even if a display failure occurs when an image signal is displayed. However, this technique assumes a quite exceptional state that a display failure occurs in part of the display areas, and also is an invention for responding to occurrence of failure. No idea exists here about what provision of screens should be that responds to a demand from the driver with good visibility with respect to a plurality of display screens.

Accordingly, the present invention is made in view of solving such a problem, and an object thereof is to provide a multi-screen display device which arranges a screen that is confirmed more frequently at a display position close to a driver according to the driving state of the driver to thereby improve visibility thereof, and a program thereof.

In a multi-screen display device according to a first aspect, when outputting a multi-display screen displaying two or more of various screens of a navigation device, various imaging screens of a camera imaging an outside of a vehicle, and various screens of a hands-free transmission/reception device of a car phone, a control circuit determines a display position needed to be displayed on the multi-display screen according to a vehicle driving state.
Here, the various screens of a navigation device, the various imaging screens of cameras imaging an outside of a vehicle, and the various screens of a hands-free transmission/reception device of a car phone are part of a navigation search control screen setting necessary requirements to search for a route from a place of departure to a destination of the vehicle, a navigation map screen displaying the position of the vehicle on a map, a night vision screen recognizing an object on the road at night by infrared, a back guide monitor screen for recognizing a rear side of the vehicle, a blind corner monitor screen for recognizing an orthogonal direction of the vehicle, a hands-free transmission/reception screen of a car phone, and the like.
Particularly, The multi-display screens can be identified from the navigation search screen, the navigation map screen, the night vision screen, the back guide monitor screen, the blind corner monitor screen, and the hands-free transmission/reception screen, which are screens of functions which are normally used, and an inter-vehicle distance screen constituted of one of a screen of measuring instruments such as a speedometer and/or an inter-vehicle distance display for recognizing a preceding vehicle by a radar and maintaining an inter-vehicle distance according to the speed, and so on. Further, the navigation search screen and the navigation map screen cannot be confirmed simultaneously in one screen display, but using two or more screens, a standby state or an operation possible state is made so as to allow quick operation upon stop of the vehicle.
Further, the above control circuit determines screens needed as the multi-display screen according to a vehicle driving state. As the vehicle driving state, screens which is needed to be displayed on the multi-display screen are determined based on one or more state determinations out of a determination of traveling and stop of traveling of the vehicle, a vehicle speed determination, a determination of a lighting state of a light, a range position determination of the shift lever, an operation determination of the parking brake, and a hands-free transmission/reception determination of a car phone, and for the selected number of screens, a display position on the multi-display screen is determined according to a traveling state.

A determination according to the vehicle driving state of the multi-screen display device according to a second aspect is based on one or more state determinations out of a determination of traveling on a road by a navigation function, a determination of traveling and stop of traveling of a vehicle, a vehicle speed determination, a determination of a lighting state of a light, a range position determination of a shift lever, and a determination of operation of a parking brake.
Note that, in the determination according to the vehicle driving state, the determination of traveling and stop of traveling of the vehicle can be commonized with the vehicle speed determination and the range position determination of the shift lever. Further, the vehicle speed determination can be commonized with the range position determination of the shift lever. Here, one or more state determinations out of these determination of traveling and stop of traveling of a vehicle, vehicle speed determination, determination of a lighting state of a light, range position determination of a shift lever, and determination of operation of a parking brake are presented as conditions which will suffice to change the display state, where it is free to add any other requirement.

The control circuit of the multi-screen display device according to a third aspect estimates a vehicle stop time by a determination of stop of traveling of the vehicle, a range position determination of a shift lever, and a determination of an operation state of a parking brake as the vehicle driving state, and changes a screen needed to be displayed on the multi-display screen and a display position on the multi-display screen.
Here, a determination of application of the parking brake by an operation determination of the parking brake as the vehicle driving state means a stop of traveling for a long time for example. A sudden stop of traveling of the vehicle means a stop at a signal, and moving of the navigation search screen or the like is performed assuming a stop at the signal for one to three minutes. In the case of repeated stop at a signal of the same intersection, it is possible to measure a time of stop at the signal by a learning function.

The control circuit of the multi-screen display device according to a fourth aspect learns behavior of the driver on operation while driving as the vehicle driving state, and modifies a display position of a screen needed to be displayed on the multi-display screen.
Here, learning of the behavior of the driver on operation while driving means that a display screen of information which is frequently operated is determined within the range where the driver can easily operate it.

In a determination according to the vehicle driving state in the multi-screen display device according to a fifth aspect, when a navigator rides together in a passenger seat, a navigation search control screen or a navigation map screen is freely movable on a display screen on a passenger seat side separated farthest from the driver. That is, as a determination according to the traveling state, when one riding together in the passenger seat is a cooperator as a navigator, the navigation search control screen or the navigation map screen is moved to the display screen on the passenger seat side, so that the navigation search control screen or the navigation map screen becomes freely operable from the passenger seat.

To the multi-display screen of the multi-screen display device according to a sixth aspect, a measurement display screen constituted of a display of measuring instruments such as a speedometer and/or an inter-vehicle distance display for recognizing a preceding vehicle by a radar and maintaining an inter-vehicle distance according to the speed (an inter-vehicle distance detecting device of an adaptive cruise control system) is further added.
Particularly, since wide displays are becoming inexpensive, with respect to a screen of measuring instruments such as a speedometer which has been a dedicated one hitherto, for example the screen of measuring instruments such as a speedometer is not displayed when entering a garage, parking, or the like and is replaced with other visual information to be taken in as driver information thereof.

In the multi-display screen of the multi-screen display device according to a seventh aspect, the number of displayed screens is two to five. Particularly, paired information in two screens, for example, the navigation search screen and the navigation map screen, screens with different scale size ratios of navigation map screens, blind corner monitor screens in two directions, or the like are of high possibility to be used in a pair, and hence two or more screens become targets to be used. Further, when the navigation map screens having different scale sizes, the navigation search screen, and the blind corner monitor screens are used on a complicated, narrow street in an urban area, five screens are used. Therefore, normally, the multi-display screen has two to five screens.

In the multi-display screen of the multi-screen display device according to an eighth aspect, two screens of different types of maps of the navigation map screen are used. Here, the two screens of different types of the map means two screens of different types of maps such as having a difference in scale size ratio or a difference between two-dimensional map and a three-dimensional map.

Use of the different navigation map screens of the multi-screen display device according to a ninth aspect is of screens having a different scale size and/or a two-dimensional or three-dimensional map screen.

A program of a multi-screen display device according to a tenth aspect includes displaying on a multi-display screen simultaneously at least two or more of various screens of a navigation device, various imaging screens of a camera imaging an outside of a vehicle, and various screens of a hands-free transmission/reception device of a car phone, and switching screens displayed on the multi-display screen according to a vehicle driving state and changing an arrangement of selected screens displayed on the multi-display screen according to the vehicle driving state.
Here, the various screens of a navigation device, the various imaging screens of cameras imaging an outside of a vehicle, and the various screens of a hands-free transmission/reception device of a car phone can be replaced with a navigation search control screen setting necessary requirements to search for a route from a place of departure to a destination of the vehicle, a navigation map screen displaying the position of the vehicle on a map, a night vision screen recognizing an object on the road at night by infrared, a back guide monitor screen for recognizing a rear side of the vehicle, a blind corner monitor screen for recognizing an orthogonal direction of the vehicle, a hands-free transmission/reception screen of a car phone, and the like. Furthermore, the multi-display screen can be identified from the navigation search screen, the navigation map screen, the night vision screen, the back guide monitor screen, the blind corner monitor screen, and the hands-free transmission/reception screen, which are screens of functions which are normally used, and an inter-vehicle distance screen constituted of one of a screen of measuring instruments such as a speedometer and/or an inter-vehicle distance display for recognizing a preceding vehicle by a radar and maintaining an inter-vehicle distance according to the speed, and so on.

The multi-screen display device according to the first aspect selects, for screens to be displayed according to a vehicle driving state, two or more of various screens of a navigation device, various imaging screens of a camera imaging an outside of a vehicle, and various screens of a hands-free transmission/reception device of a car phone are selected as a multi-display screen, and for the selected screens, display positions of the selected display screens are determined according to the vehicle driving state.
Therefore, screens displayed on the multi-display screen constituted of the wide screen are selected according to the traveling state of the vehicle, and for the selected screens thereof, a display position of the multi-display screen is determined according to the traveling state. Thus, for example, a screen which is frequently used by the driver according to the driving state is set to a display position close to the driver, and the visibility thereof can be increased. Further, by performing weighting on the multi-display screen according to the driving state, a screen display with a different scale size, a two-dimensional map, or a three-dimensional map can be displayed even in the navigation map screen, and in a complicated alley, the blind corner monitor screen is displayed. Thus, it is possible to provide information demanded by the driver as an output matched with the vehicle driving state.

A determination according to the vehicle driving state of the multi-screen display device according to the second aspect is based on one or more state determinations out of a determination of traveling on a road by a navigation function, a determination of a traveling state and a traveling stop state of the vehicle, a vehicle speed determination, a determination of a lighting state of a light, a range position determination of a shift lever, a determination of an operation state of a parking brake, and a hands-free transmission/reception determination of a car phone. These are presented as conditions which will suffice to change the display state, and thus an optimum screen arrangement according to the vehicle driving state can be obtained in addition to the effect of the first aspect.

The control circuit of the multi-screen display device according to the third aspect estimates a vehicle stop time by a determination of traveling on a road by the navigation function, a traveling stop state of the vehicle, a range position determination of a shift lever, a determination of a vehicle speed state and an operation state of and a parking brake, and determines a screen needed to be displayed on the multi-display screen and a display position on the multi-display screen. Thus, in addition to the effect described in the first aspect or the second aspect, for example, the vehicle speed decreases gradually, and a determination of application of the parking brake in a traveling state on a road as the vehicle driving state implies that there is a high possibility of a stop of traveling for a long time. Further, a sudden stop of traveling of the vehicle means a stop at a signal by a change of the signal, and moving of the navigation search screen or the like can be performed assuming a stop at the signal for one to three minutes.

The control circuit of the multi-screen display device according to the fourth aspect learns an operation by a driver while driving, and thereby determines the position of a display screen with respect to the multi-display screen. Thus, in addition to the effect described in one of the first to third aspects, a screen arrangement considering the driver's behavior can be provided, and a screen can be easily recognized and handled by the driver.

In a determination according to the vehicle driving state of the multi-screen display device according to a fifth aspect, when a navigator is riding together on a passenger seat, the navigation search control screen or the navigation map screen is displayed on a display screen on a passenger seat side. Thus, in addition to the effect described in one of the first to fourth aspects, when a navigator rides together, the navigation search control screen and the navigation map screen are positioned on the passenger seat side so as to alleviate the burden to the driver.

To the multi-display screen displaying two or more screens of the multi-screen display device according to a sixth aspect, a measurement display screen constituted of one of a screen of measuring instruments such as a speedometer and an inter-vehicle distance display for recognizing a preceding vehicle by a radar and maintaining an inter-vehicle distance according to the speed is further added. Thus, in addition to the effect described in one of the first to fifth aspects, for entering a garage or at a parking area, it is possible to provide a screen arrangement in which the blind corner monitor screen and the back guide monitor screen are regarded more important than the screen of measuring instruments.

The multi-display screen displaying two or more screens of the multi-screen display device according to the seventh aspect has two to five screen displays. Thus, in addition to the effect described in one of the first to sixth aspects, minimum required information according to the vehicle driving state can be obtained.

In the navigation map screen of the multi-screen display device according to the eighth aspect, different navigation map screens are used. Thus, in addition to the effect described in one of the first to seventh aspects, a map demanded by the driver can be extracted from the certain screen being displayed without changing the scale size thereof.

Use of the different navigation map screen in the multi-screen display device according to the ninth aspect is of screens having a different scale size and/or a two-dimensional or three-dimensional map screen. Thus, in addition to the effect described in the eighth aspect, regarding a traveling direction or the like at an intersection with low visibility, a road can be easily identified by a screen having a different scale size and/or a two-dimensional or three-dimensional map screen, and a time for the driver to confirm the navigation map screen can be shortened.

A program of a multi-screen display device according to the tenth aspect displays on a multi-display screen simultaneously at least two or more of various screens of a navigation device, various imaging screens of a camera imaging an outside of a vehicle, and various screens of a hands-free transmission/reception device of a car phone and switches screens displayed on the multi-display screen according to a vehicle driving state and changes an arrangement of selected screens displayed on the multi-display screen according to the vehicle driving state.
Therefore, screens displayed on the multi-display screen constituted of the wide screen are selected according to the traveling state of the vehicle, and for the selected screens thereof, a display position of the multi-display screen is determined according to the traveling state. Thus, for example, a screen which is frequently used by the driver according to the driving state is set to a display position close to the driver, and the visibility thereof can be increased. Further, by performing weighting on the multi-display screen according to the driving state, a screen display with a different scale size, a two-dimensional map, or a three-dimensional map can be displayed even in the navigation map screen, and in a complicated alley, the blind corner monitor screen is displayed. Thus, it is possible to make information demanded by the driver as an output matched with the vehicle driving state.

### BRIEF DESCRIPTION OF THE DRAWINGS

FIG. 1 is a block diagram showing an overall structure of a multi-screen display device according to an embodiment of the present invention;
FIG. 2 is an explanatory diagram of a setting screen for performing various settings displayed on the multi-screen display device according to the embodiment of the present invention;
FIG. 3 is an explanatory diagram of a screen arrangement of a "start mode" of the embodiment of the present invention;
FIG. 4 is an explanatory diagram of a screen arrangement of a "back mode" of the embodiment of the present invention;
FIG. 5 is an explanatory diagram of a screen arrangement of a "low speed traveling mode" of the embodiment of the present invention;
FIG. 6 is an explanatory diagram of a screen arrangement of a "high speed traveling mode" of the embodiment of the present invention;
FIG. 7 is an explanatory diagram of a screen arrangement of a "traveling mode" of the embodiment of the present invention;
FIG. 8 is an explanatory diagram of a screen arrangement of a "temporary stop (short time) mode" of the embodiment of the present invention;
FIG. 9 is an explanatory diagram of a screen arrangement of a "temporary stop (long time) mode" of the embodiment of the present invention;
FIG. 10 is an explanatory diagram of a screen arrangement of a "night vision priority mode" of the embodiment of the present invention;
FIG. 11 is an explanatory diagram of a screen arrangement of a "hands-free priority mode" of the embodiment of the present invention;
FIG. 12 is an explanatory diagram of a screen arrangement of a "blind corner monitor priority mode" of the embodiment of the present invention;
FIG. 13 is a flowchart of a part of a main routine of the multi-screen display device according to the embodiment of the present invention;
FIG. 14 is a flowchart of a remaining part of the main routine of the multi-screen display device according to the embodiment of the present invention;
FIG. 15 is a flowchart of a routine for determining a screen position outputted by the multi-screen display device according to the embodiment of the present invention; and
FIG. 16 is a flowchart of a routine for determining manually a screen position outputted by the multi-screen display device according to the embodiment of the present invention.

### DETAILED DESCRIPTION OF THE PREFERRED EMBODIMENTS

Hereinafter, an embodiment of the present invention will be explained based on the drawings. Note that in the embodiment the same symbols and the same references in the drawings designate same or corresponding functional parts, and hence duplicating explanation will be omitted herein.

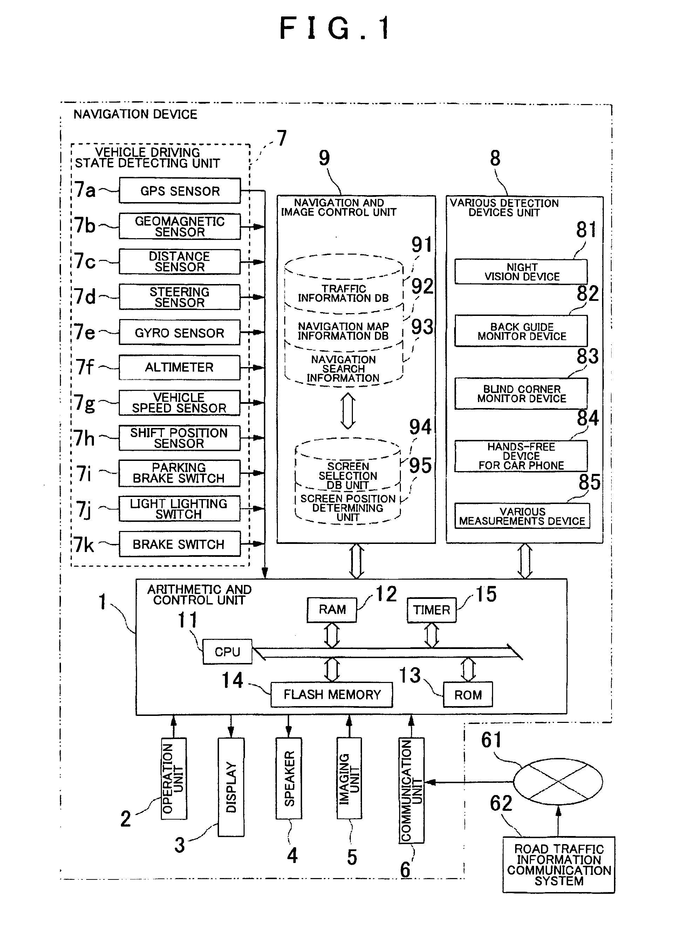

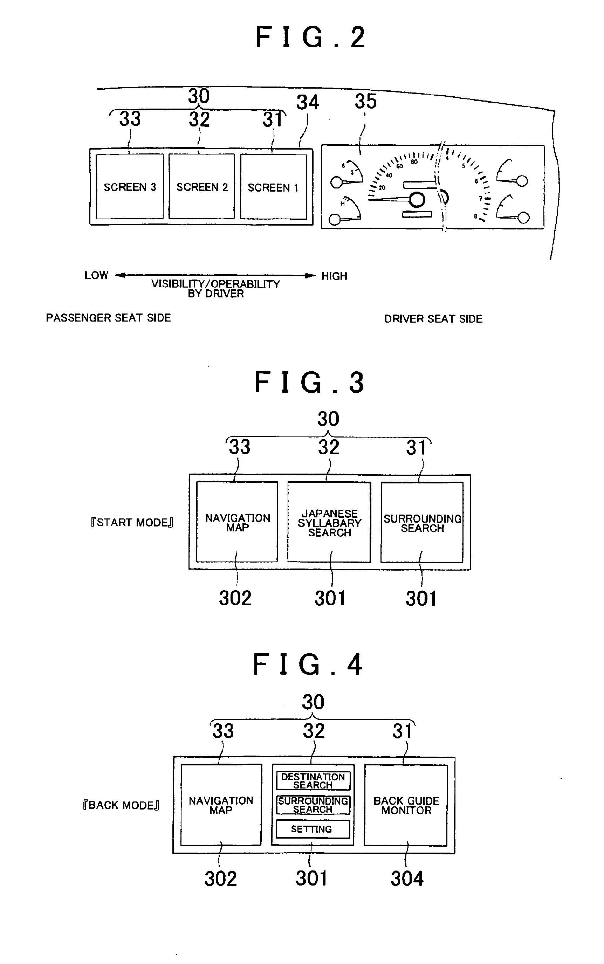

FIG. 1 is a block diagram showing an overall structure of a multi-screen display device according to the embodiment of the present invention, and FIG. 2 is an explanatory diagram of a setting screen for performing various settings displayed on the multi-screen display device according to the embodiment of the present invention.

In FIG. 1, the multi-screen display device of this embodiment is constituted of an arithmetic and control unit 1 having a microprocessor performing various arithmetic processing based on inputted information, an operation unit 2 of various key inputs, voice inputs, touch switches and/or the like accepting an operation from an operator such as a driver, a display 3 capable of performing multi-screen display, which is formed of liquid crystal, EL, or the like and displays information such as operation information, a map, or the like to the operator such as the driver, a speaker 4 performing audio guidance related to route guidance and guidance on traffic restriction information or traffic jam information. The device is further constituted of an imaging unit 5 detecting respective images of a night vision device 81, a back guide monitor device 82, and a blind corner monitor device 83, a vehicle driving state detecting unit 7 detecting the current position of the vehicle and having various sensors so that the current position, direction, distance to a target (for example an intersection) or the like of the vehicle can be detected, a communication unit 6 performing communication via a network 61 with an information center such as a vehicle information and communication system (VICS (registered trademark)) 62, and a various detection devices unit 8 constituted of the night vision device 81 capturing and visualizing a bicycle, a pedestrian, an obstacle or the like on the road at night by infrared and allowing the driver to see and confirm the image thereof, the back guide monitor device 82 allowing to confirm a rear side of the vehicle by an image, the blind corner monitor device 83 recognizing an orthogonal direction of a vehicle, a hands-free device 84 for a car phone, a various measurements device 85 displaying a measurement display screen constituted of one of a display of measuring instruments such as a speedometer, an inter-vehicle distance display for recognizing a preceding vehicle by a radar and maintaining an inter-vehicle distance according to the speed and measuring information of various vehicle driving states, and so on.

The arithmetic and control unit 1 having a microprocessor and constituting a control circuit of this embodiment includes a CPU 11 performing calculation and control and performing overall control, and internal storage devices such as a RAM 12 which is used as a working memory by the CPU 11 when performing various calculation processing and stores a route search, route data when a route is searched, and a link ID where traffic restriction information exists, a ROM 13 which stores, in addition to a control program, a route change guide processing program guiding the user about a change to a traffic jam avoiding route, a search routine, and the like, and a flash memory 14 storing a program read from the ROM 13, and a timer 15 counting a time, and so on.

In ROM 13, various programs are stored. It is arranged that various data are stored in the RAM 12, and further a program, data or the like is read from an external storage device, a memory card, or the like and written in the flash memory 14. Furthermore, the program, data or the like can be updated by replacing the memory card or the like or by installing a predetermined program, data or the like from the outside.

The vehicle driving state detecting unit 7 detecting the current state of the vehicle is constituted of a GPS sensor 7a, a geomagnetism sensor 7b, a distance sensor 7c, a steering sensor 7d, a gyro sensor 7e as a direction detecting unit, and an altimeter 7f. The unit is further constituted of a vehicle speed sensor 7g detecting a traveling speed and a traveling distance of the vehicle, a shift position sensor 7h for an automatic transmission, a parking brake switch 7i, a light lighting switch 7j, a brake switch 7k detecting pressing down of a brake, and so on. Incidentally, the distance sensor 7c and the vehicle speed sensor 7g may be a single one.

Note that the navigation device of this embodiment is structured to be capable of receiving, at every predetermined time from a vehicle information and communication system center 62 via a network 61, information regarding traffic jam on a road or the like created by gathering information of a traffic control system of the police, Japan Highway Public Corporation, or the like, road traffic information such as traffic restriction information, and the like. Further, this road traffic information is detailed information about, for example, road traffic jam information regarding a traffic jam on a road or the like, road traffic information such as traffic restriction information due to a road construction, a building operation, or the like. The detailed information include, in the case of the traffic jam information, a later-described VICS link ID, the actual length of a traffic jam, an expected time when the traffic jam is alleviated, and so on, and include, in the case of the traffic restriction information, a VICS link ID, a continuing period of a road construction, a building operation, or the like, the type of a traffic restriction such as a closure, an alternating passing on one side, and a lane restriction, a time zone of a traffic restriction, and so on.

Further, as the network 61, for example, a communication system such as a wireless LAN (Local Area Network), a WAN (Wide Area Network), or a communication line network such as a telephone line network, a public communication line network or the like can be used. Then a communication system using a CS broadcast and a BS broadcast by a broadcasting satellite, a terrestrial digital television broadcast, an FM multiple wave broadcast, or the like can be used. Furthermore, a communication system such as ETC (Electronic Toll Collection System), which is a non-stop, automatic payment system used in an intelligent transport system (ITS), or a dedicated short range communication (DSRC) can also be used.

The characteristic component elements constituting the navigation device of this embodiment will be explained further specifically based on FIG. 1.
To the arithmetic and control unit 1, the peripheral devices are connected electrically, which are the operation unit 2, the display 3, the speaker 4, the imaging unit 5, the various sensors of the vehicle driving state detecting unit 7, the communication unit 6, and the various detection devices unit 8. The operation unit 2, which corrects the current position at the time of starting traveling, is operated when inputting a place of departure as a guidance start point and a destination as a guidance end point, when performing a search for information regarding a facility, or the like, and is constituted of a plurality of operation switches such as various keys. Then the arithmetic and control unit 1 performs control so as to execute various corresponding operations based on switch signals outputted by operations of the switches of the operation unit 2. The control circuit of the navigation device of this embodiment is constituted of the arithmetic and control unit 1, the operation unit 2, the imaging unit 5, the various sensors of the vehicle driving state detecting unit 7, the communication unit 6, and the various detection devices unit 8.
In addition, the operation unit 2 can also be constituted of a touch panel provided on a front face of the display 3.

For the display 3, a CRT display, a plasma display, an EL, or the like is used, and a hologram device projecting a hologram on the windshield of the vehicle or the like can be used. Further, the display 3 may double as a touch switch as the operation unit 2.
In particular, the display 3 of this embodiment is a multi-display screen displaying three screens simultaneously in a lateral direction. These three screens can be one in which the three screens are drawn by a single scan line simultaneously or one in which three screens are drawn by independent scan lines.

Here, there are displayed two or more of a navigation search control screen 301, a navigation map screen 302, a night vision screen 303, a back guide monitor screen 304, a blind corner monitor screen 305, a hands-free transmission/reception screen 306, and a various measurements screen 307 of the various measurements device 85. Further, operation guidance, an operation menu, guidance for keys, route guidance from the current position to a destination, guidance information along route guidance, route change guidance information which will be explained later, traffic information, news, weather forecast, time, an e-mail, a television program, or the like is displayed as necessary.

The display 3 of this embodiment has, specifically, a wide screen 30 constituted of three independent screens, a screen 31, a screen 32, and a screen 33 as shown in FIG. 2. In this embodiment, it is disposed on a passenger seat side of a combination meter 35 in an instrument panel. Therefore, for the driver, the closer it is to the combination meter 35 the more the visibility thereof improves, and when the wide screen 30 doubles as the touch switches, the operability thereof improves as well.
Note that in the wide screen 30 in FIG. 2, a frame 34 to partition the screen 31, the screen 32, and the screen 33 is formed, but when the present invention is carried out, the frame 34 is not always necessary.

The speaker 4 outputs audio guidance to guide for traveling along a guidance route and voice guidance to guide for a route change in the route guidance based on an instruction from the arithmetic and control unit 1. In addition, as the audio to be output from the speaker 4, various sound effects or various guide information recorded in a memory or the like in advance can be outputted other than synthesized voices. Particularly, in this embodiment, the speaker outputs by audio about that there exists traffic information which should be confirmed or reproduces as direct voice the traffic information which should be confirmed.

The imaging unit 5 is constituted of a plurality of CCD cameras for detecting images used in the night vision device 81 which captures and visualizes a bicycle, a pedestrian, an obstacle or the like on the road at night by infrared, the back guide monitor device 82 allowing to confirm a rear side of the vehicle, the blind corner monitor device 83 recognizing a substantially orthogonal direction of a front side (or rear side) of the vehicle.

The GPS sensor 7a detects the current position of the vehicle on the earth and the current time by receiving a radio wave generated by an artificial satellite. The geomagnetic sensor 7b detects the vehicle direction by measuring the geomagnetic field. The distance sensor 7c detects a distance or the like between predetermined positions on a road or the like. Here, as the distance sensor 7c, for example, the rotation speed of a wheel of the vehicle is measured and a distance is detected based on the measured rotation speed, but an output of the vehicle speed sensor 7g may be integrated for detecting a distance.

Further, the steering sensor 7d detects the steering angle of the vehicle. Here, as the steering sensor 7d, for example, an optical rotation sensor attached to a rotating part of the steering wheel, a rotation resistance sensor, an angle sensor attached to a wheel, or the like is used.
Then the gyro sensor 7e detects a turning angle of the vehicle. Here, as the gyro sensor 7e, for example, a gas-rate gyro, a vibration gyro, or the like is used. Further, by integrating a turning angle detected by the gyro sensor 7e, the vehicle direction can be detected.

Furthermore, the altimeter 7f becomes the reference for determining which road the vehicle is traveling on in the case where an elevated expressway and an open road are parallel built. The shift position sensor 7h detects the position of "D" meaning traveling, "R" meaning traveling backward, and "P" meaning parking to determine traveling of the vehicle, and further the parking brake switch 7i is for detecting whether the parking brake is set or not. Then the light lighting switch 7j is for detecting a difference between day and night by lighting of the headlights, side marker lamps, fog lamps, or the like.

Further, the communication unit 6 is a beacon receiver receiving road traffic information constituted of information such as traffic jam information, traffic restriction information, parking area information, traffic accident information, and the state of congestion in a service area transmitted from the vehicle information and communication system center 62 for example, as a radio wave beacon, an optical beacon or the like via a radio wave beacon device, a light beacon device, or the like disposed along a road. Further, the communication unit 6 is a network device which allows communication in a communication system such as a communication line network as the network 61. Furthermore, the communication unit 6 includes an FM receiver receiving FM multiplex information constituted of information such as news and weather forecast as an FM multiplex broadcast via an FM broadcast station, besides information from the vehicle information and communication system center 62. Although the beacon receiver and the FM receiver are made as a unit and disposed as a VICS receiver, note that they may be disposed separately.

Then the various detection devices unit 8 detecting a vehicle driving state has a night vision device 81 capturing and visualizing a pedestrian, a bicycle, an obstacle, an animal or the like on the road at night by infrared and making the state on the road easily recognizable by the driver confirming the image thereof. This night vision device 81 outputs the single night vision screen 303. Further, the back guide monitor device 82 allowing to confirm a rear side of the vehicle by an image visualizes the rear side of the vehicle normally with a camera having a wide-angle lens and outputs the single back guide monitor screen 304 as an aid for confirming the rear side of the vehicle when the driver backs up the vehicle.

The blind corner monitor device 83 recognizing an orthogonal direction of a front side (or rear side) of the vehicle is attached on a front edge of the vehicle and used for recognizing a traffic state of the road when the vehicle enters a target road, such as when exiting from an alley to an open road or from a garage to a road. In some cases the device is attached similarly to a rear side of the vehicle, and of course it is possible to attach two such devices respectively to the front side and the rear side of the vehicle. The output of this blind corner monitor device 83 is normally represented by left and right two screens. Images in two directions are optically combined by one camera using a prism, and the left and right of the front side of the vehicle are visualized to be the single blind corner monitor screen 305. Of course, they can also be two screens.

Furthermore, the hands-free device 84 of a car phone having a telephone menu of transmission/reception buttons, abbreviation buttons, and a telephone book and the like of a telephone displays on the screen an incoming call button for hooking off when there is an incoming call, and constitutes the hands-free transmission/reception screen 306 of the car phone by a screen used for these telephone functions. Note that it is explained here with a car phone, and the concept of a car phone used in a vehicle includes a mobile telephone that is used in a vehicle, have a Bluetooth function or is electrically connected.
Further, the various measurements device 85, which performs measurement display of measuring instruments such as a speedometer and display of a numerical expression and a character expression or the like of an inter-vehicle distance for recognizing a preceding vehicle by a radar and maintaining an inter-vehicle distance according to the speed, represents measuring instruments such as a speedometer, a tachometer, a fuel gauge, and a cooling temperature as images. The device further outputs the various measurements screen 307 including a measurement display screen constituted of a display of an inter-vehicle distance for recognizing a preceding vehicle by a radar and maintaining an inter-vehicle distance according to the speed. Note that the various screens of the hands-free transmission/reception device means a screen used for transmission/reception with a telephone such as a hands-free reception switch screen and transmission switch screen, a telephone book screen, and a telephone number input screen.

The navigation and image control unit 9 in this embodiment is explained in the case where a hard disk is used. It has a function to read a predetermined program or the like according to a traffic information DB (database, hereinafter simply referred to as 'DB') 91, a navigation map information DB 92 and a navigation search information 93 stored in the hard disk. In addition, in this embodiment the hard disk is used as the navigation and image control unit 9, but a RAM or the like can be used besides the hard disk.

The traffic information DB 91 stores traffic jam information created from road traffic information regarding a traffic jam or the like of a road under the current condition constituted of the actual length of a traffic jam, an expected time when the traffic jam is alleviated, and so on received from the vehicle information and communication system center 62. Further, this traffic information DB 91 stores traffic restriction information created from road traffic information regarding traffic restriction information or the like due to a road construction, a building operation, or the like having a traffic restriction, received from the vehicle information and communication system center 62. In addition, broadcast information from a broadcast station of the embodiment of the present invention is not used as the traffic information DB 91, but is information obtained by the VICS link ID.

The road traffic information received from the vehicle information and communication system center 62 includes the VICS ID together with information such as type information, position, distance of a traffic jam section, and degree of traffic jam. The VICS link ID is an identification number given to a VICS link as a traveling guidance link standardized by dividing a road for each predetermined intersection. Note that the road traffic information also includes information such as coordinates of a start point and an end point in each VICS link, a distance from a start point to an end point, and so on.

In general, a road (link) stored in the navigation map information DB 92 is more finely divided than the VICS link. Accordingly, the traffic information DB 91 has a conversion table (comparison table) between a link ID given as an identification number to each road and a VICS link ID, and it is possible to identify a corresponding link ID based on the VICS link ID. Thus, in the navigation device, when the VICS link ID is received from the vehicle information and communication system center 62, the section of a road for which road traffic information such as traffic jam information should be displayed can be identified based on the VICS link ID. Then the VICS link ID of the road traffic information regarding a traffic jam of a road or the like under the current condition received from the vehicle information and communication system center 62 is converted into a link ID and stored as traffic jam information. Further, the VICS link ID of the road traffic information regarding traffic restriction information or the like received from the vehicle information and communication system center 62 is converted into a link ID and stored as traffic restriction information.

Further, the traffic information DB 91 stores the navigation search information 93 for setting necessary requirements to search for a route from a place of departure to a destination of the vehicle and the navigation map information DB 92 used for traveling guidance, route search, and display of the vehicle position of the navigation device of this embodiment. Here, the navigation map information DB 92 is constituted of various information needed for route guidance and map display, and is constituted of, for example, newly built road information for identifying newly built roads, map display data for displaying a map, intersection data regarding intersections, node data regarding nodes, link data regarding a road which is one type of facilities, search data for searching for a route, shop data regarding POI (Point of Interest) such as a shop which is one type of facility, search data for searching for a point, and so on. Then the contents of the navigation map information DB 92 are updated by downloading update information distributed via the communication unit 6 from the map information distribution center.

Particularly, the map display data is constituted of units divided into four (1/2 length), into 16 (1/4), and into 64 (1/8) based on secondary meshes sectioned by 10 km x 10 km, and units of respective locations are set so that data amounts of the units are at substantially same levels. A unit of the smallest 64 division size has a dimension of about 1.25 km square. In this embodiment, a "detailed navigation map screen" is map information enlarged larger than a "wide area navigation map screen".

As the node data, there are stored data or the like regarding branch points of actual roads (including intersections, T-shape roads, and so on), coordinates (positions) of node points set for predetermined distances according to the radius of curvature or the like on roads, node attributes representing whether a node corresponds to an intersection, a connection link number list as a list of link IDs each of which being an identification number of a link for connecting to a node, an adjacent node number list as a list of node numbers of nodes each adjacent to another node via a link, heights (altitudes) of node points, and so on.

As the link data, there are recorded data representing a width of a road to which a link belongs, a gradient, a cant, a bank, a road surface condition, the number of lanes of a road, a point where the number of lanes decreases, a point where the width becomes narrow, a crossing, and the like regarding each link constituting a road are recorded. Regarding corners, there are recorded data representing the radius of curvature, an intersection, a T-shape road, the entrance and the exit of a corner, and so on. Regarding road attributes, data representing a descending road, an ascending road, and so on are recorded. Regarding road types, there are stored data representing open roads such as national highways, prefectural highways, narrow roads, as well as toll roads such as national expressways, urban expressways, ordinary toll roads, toll bridges, and so on. Further, regarding the toll roads, data regarding entrances and exits of toll roads (ramp way), tollgates (interchange), and so on are recorded. As the shop data, there are recorded data regarding POIs such as hotels, hospitals, service stations, parking areas, tourist facilities, and so on in each region are recorded together with IDs identifying the POIs. In addition, in the traffic information DB 91, audio output data for outputting predetermined information by the speaker 4 of the navigation device are recorded as well.

Then as the route search data, there are stored data used when searching and displaying a route to a destination set in the navigation search information 93 for setting necessary requirements to search for a route from a place of departure to a destination of the vehicle. The data are constituted of cost data for calculating and using a search cost constituted of a cost for passing a node (hereinafter simply referred to as a "node cost") or a cost for a link constituting a road (hereinafter simply referred to as a "link cost"), route display data for displaying a guidance route selected by a route search on the map of the display 3, and so on.

A screen selection DB unit 94 selecting three screens by the driving state of the vehicle driving state detecting unit 7 stores the navigation search control screen 301 for searching for a route and controlling it as a navigation function formed by the navigation and image control unit 9 and the navigation map screen 302 for guiding according to the route obtained by a route search and identifying the position of the vehicle, the night vision screen 303 formed by the night vision device 81, the back guide monitor screen 304 formed by the back guide monitor device 82, the blind corner monitor screen 305 formed by the blind corner monitor device 83, the hands-free transmission/reception screen 306 formed by the hands-free device 84 of a car phone, and the measurements screen 307 of the various measurements device 85. Three arbitrary screens are selected therefrom by an output of the vehicle driving state detecting unit 7.

The screen position determining unit 95 determining an arrangement of the three screens selected by the screen selection DB unit 94 according to a driving state of the vehicle driving state detecting unit 7 determines whether each of the selected three screens is displayed on a "screen 1" 31 in FIG. 2 with better visibility and operability by the driver, whether it is displayed on a "screen 3" 33 in FIG. 2 with better visibility and operability from the passenger seat side, or whether it is displayed on a "screen 2" 32 in FIG. 2 at a middle position therebetween, according to the driving state of the vehicle driving state detecting unit 7. It attempts to keep the best visibility and operability for the driver according to the driving state of the vehicle driving state detecting unit 7.

Next, specific screen arrangements of display on the "screen 1" 31, "screen 2" 32, "screen 3" 33 in FIG. 2 stored in the screen selection DB unit 94 will be explained.

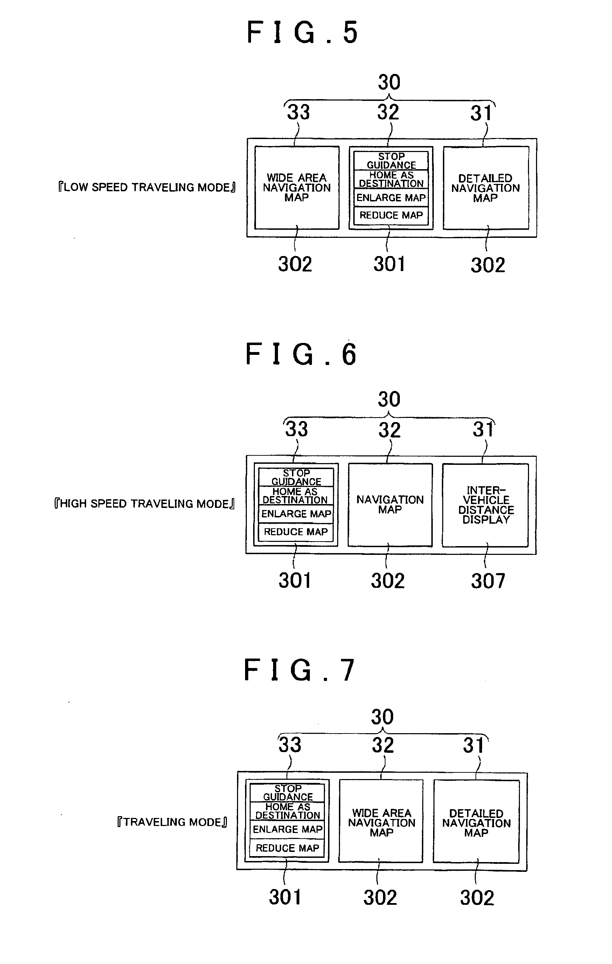

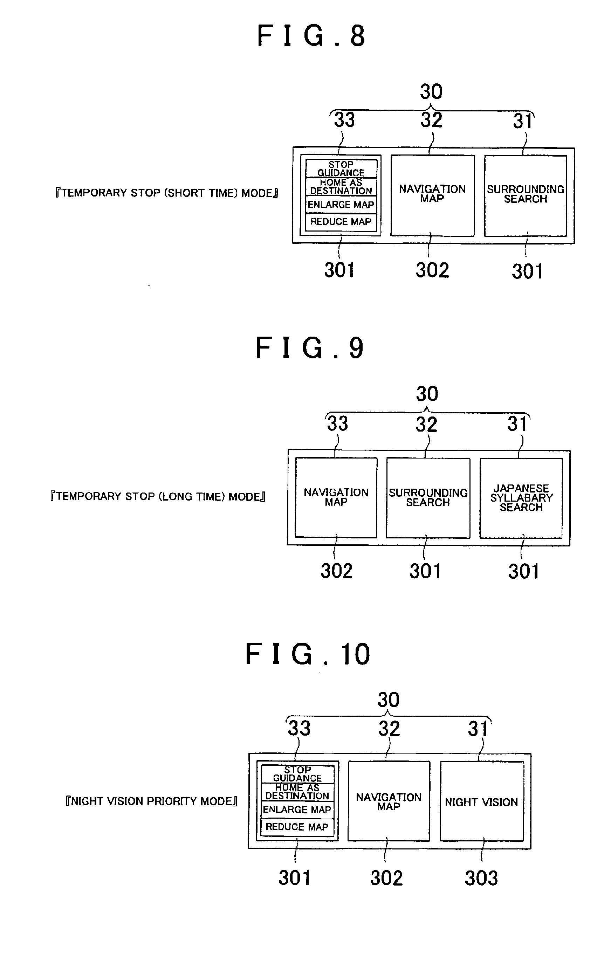

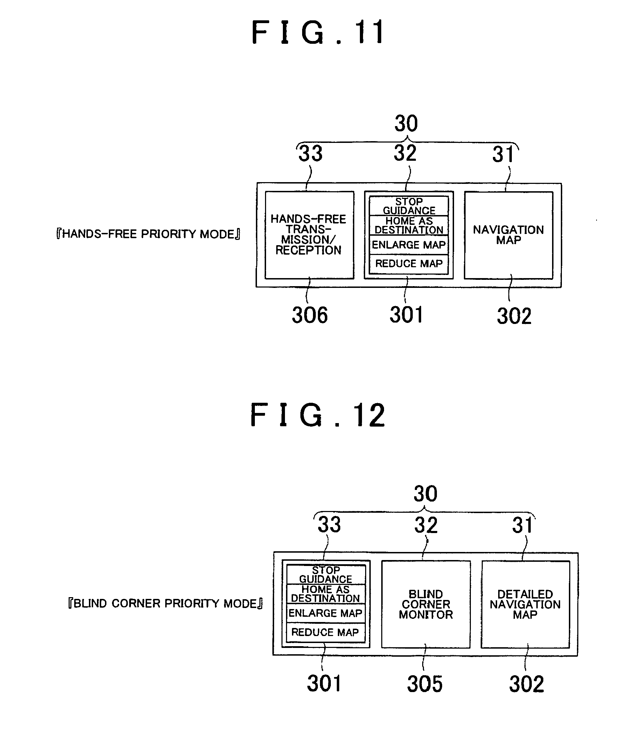

FIG. 3 is an explanatory diagram of a screen arrangement of a "start mode" of the embodiment of the present invention, FIG 4 is an explanatory diagram of a screen arrangement of a "back mode" of the embodiment of the present invention, FIG. 5 is similarly an explanatory diagram of a screen arrangement of a "low speed traveling mode", FIG. 6 is similarly an explanatory diagram of a screen arrangement of a "high speed traveling mode", FIG. 7 is similarly an explanatory diagram of a screen arrangement of a "traveling mode", FIG. 8 is similarly an explanatory diagram of a screen arrangement of a "temporary stop (short time) mode", FIG. 9 is similarly an explanatory diagram of a screen arrangement of a "temporary stop (long time) mode", FIG. 10 is similarly an explanatory diagram of a screen arrangement of a "night vision priority mode", FIG. 11 is similarly an explanatory diagram of a screen arrangement of a "hands-free priority mode", and FIG. 12 is similarly an explanatory diagram of a screen arrangement of a "blind corner monitor priority mode".

FIG. 3 shows a screen arrangement of the "start mode". On the "screen 1" 31, a "surrounding search screen" in the navigation search control screen 301 for setting necessary requirements to search for a route from a place of departure to a destination of the vehicle is set. Further, on the "screen 2" 32, a "Japanese syllabary search screen" in the navigation search control screen 301 is set. On the "screen 3" 33, the navigation map screen 302 showing the current position of the vehicle is set. Incidentally, the "surrounding search screen" of the "screen 1" 31 and the "Japanese syllabary search screen" of the "screen 2" 32 can be set with priority or arbitrarily by the user.

FIG. 4 shows the screen arrangement of the "back mode". The back guide monitor screen 304 is set to the "screen 1" 31. Further, a "search menu screen" in the navigation search control screen 301 is set to the "screen 2" 32. The navigation map screen 302 is set to the "screen 3" 33. Incidentally, the "search menu screen" of the "screen 2" 32 can be the "surrounding search screen" or the "Japanese syllabary search screen".
FIG. 5 shows a screen arrangement of the "low speed traveling mode". A "detailed navigation map" in the navigation map screen 302 of the vehicle is set to the "screen 1" 31. Further, the "search menu screen" containing "stop guidance", "home as destination (returning home)", "enlarge map", "reduce map" and the like in the navigation search control screen 301 is set to the "screen 2" 32. Then a "wide area navigation map" in the navigation map screen 302 is set to the "screen 3" 33.

FIG 6 shows the screen arrangement of the "high speed traveling mode". An inter-vehicle distance constituted of a display of an inter-vehicle distance for recognizing a preceding vehicle by a radar and maintaining an inter-vehicle distance according to the speed is set as the various measurements screen 307 to the "screen 1" 31. Further, the navigation map screen 302 is set to the "screen 2" 32. Then, the "search menu screen" containing "stop guidance", "home as destination (returning home)", "enlarge map", "reduce map" and the like in the navigation search control screen 301 are set to the "screen 3" 33.

FIG. 7 shows the screen arrangement of the "traveling mode". The "detailed navigation map" in the navigation map screen 302 of the vehicle is set to the "screen 1" 31. Further, a "wide area navigation map" in the navigation map screen 302 is set to the "screen 2" 32. The "search menu screen" containing "stop guidance", "home as destination (returning home)", "enlarge map", "reduce map" and the like in the navigation search control screen 301 is set to the "screen 3" 33.

FIG. 8 shows the screen arrangement of the "temporarily stop (short time) mode". The "surrounding search screen" in the navigation search control screen 301 is set to the "screen 1" 31. Further, the navigation map screen 302 is set to the "screen 2" 32. Then the "search menu screen" containing "stop guidance", "home as destination (returning home)", "enlarge map", "reduce map", and the like in the navigation search control screen 301 is set to the "screen 3" 33.
FIG. 9 shows the screen arrangement of the "temporarily stop (long time) mode". The "Japanese syllabary search screen" in the navigation search control screen 301 is set to the "screen 1" 31. Further, the "surrounding search screen" in the navigation map screen 302 is set to the "screen 2" 32. The navigation map screen 302 is set to the "screen 3" 33.

FIG. 10 shows the screen arrangement of the "night vision priority mode" that is the "traveling mode" at "night". The night vision screen 303 is set to the "screen 1" 31. Further, the navigation map screen 302 is set to the "screen 2" 32. The navigation search control screen 301 is set to the "screen 3" 33.
FIG. 11 shows the screen arrangement of the "hands-free priority mode". The navigation map screen 302 is set to the "screen 1" 31. Further, the navigation search control screen 301 is set to the "screen 2" 32. The hands-free transmission/reception screen 306 is set to the "screen 3" 33.
FIG. 12 shows the screen arrangement of the "blind corner priority mode". The navigation map screen 302 is set to the "screen 1" 31. Further, the blind corner monitoring screen 305 is set to the "screen 2" 32. The navigation search control screen 301 is set to the "screen 3" 33.

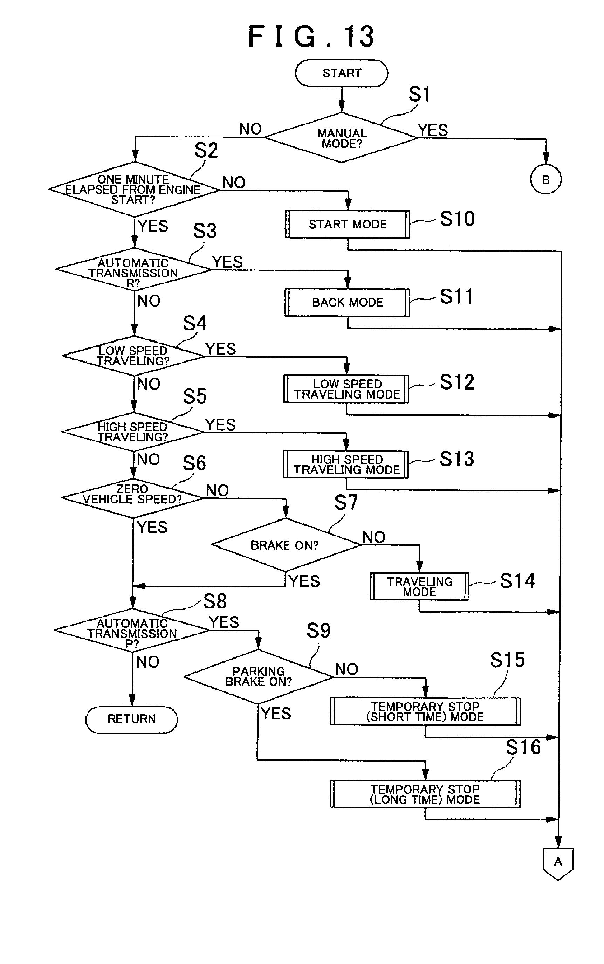

Next, processing executed by the arithmetic and control unit 1 in the multi-screen display device having the above-described structure will be explained based on FIG. 13 to FIG. 16.

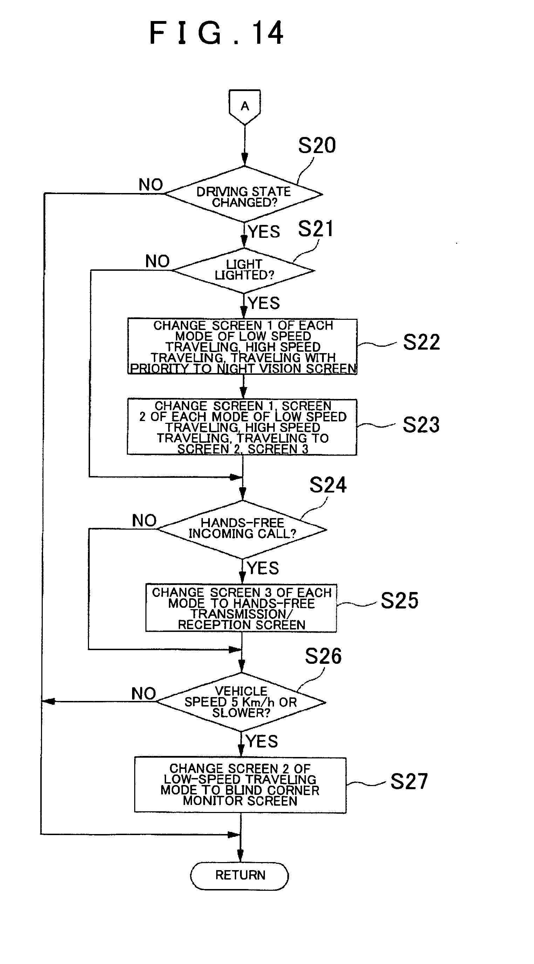

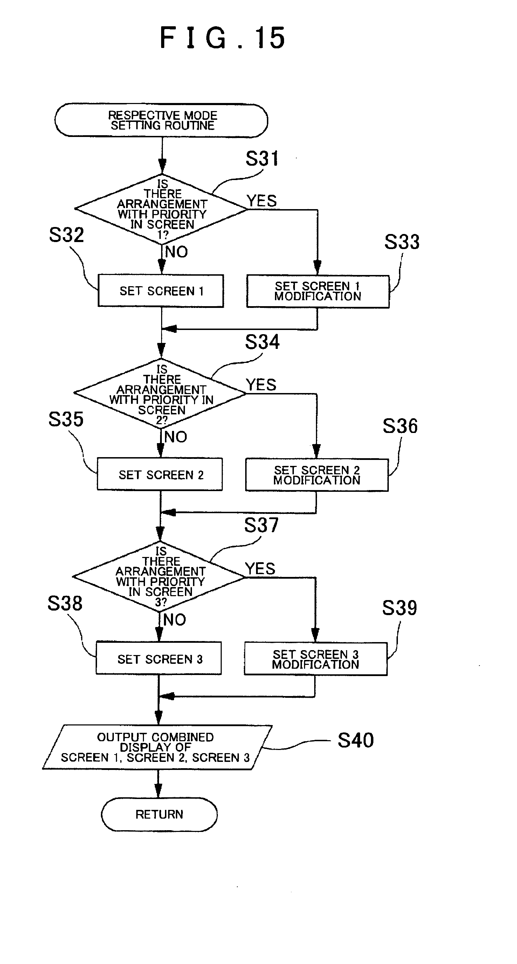

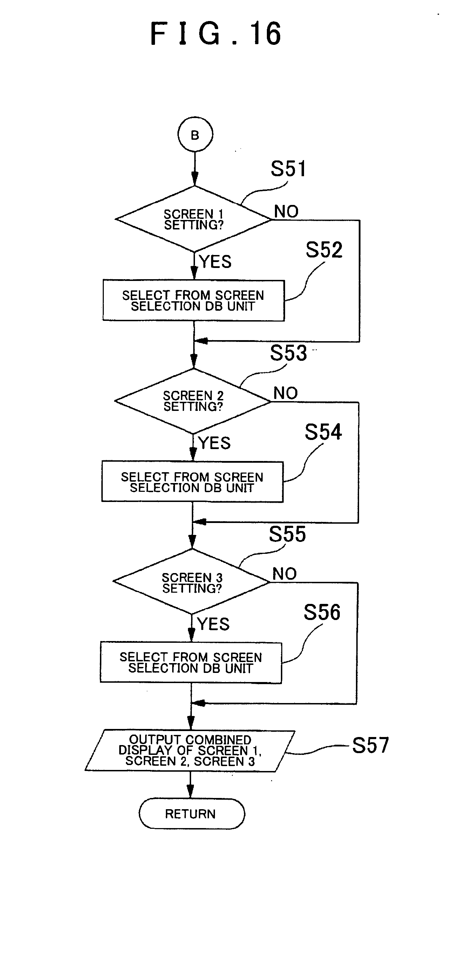

FIG. 13 and FIG. 14 are flowcharts of a main routine of the multi-screen display device according to the embodiment of the present invention, FIG 15 is a flowchart of a routine for determining a screen position outputted by the multi-screen display device according to the embodiment of the present invention, and FIG. 16 is a flowchart of a routine for determining manually a screen position outputted by the multi-screen display device according to the embodiment of the present invention.
This routine is a program executed repeatedly by turning on of the ignition switch.

First, in step S1, whether it is in a manual mode or not is determined. When the manual mode is selected from the operation unit 2, processing of a routine in step S51 and thereafter is performed, and when the manual mode is not selected, the system enters processing from step S2. In step S2, whether it is within one minute since the engine of the vehicle is started is determined. When it is within one minute since the engine of the vehicle is started, the destination is set, and thus in step S 10 the system enters processing of the start mode in which the navigation function setting is a main subject, where the screen arrangement shown in FIG. 3 is selected for the wide screen 30 of the display 3.

When one minute or longer is elapsed since the engine of the vehicle is started in step S2, it is determined whether the shift position of the automatic transmission is "R (reverse)" or not in step S3. When the shift position of the automatic transmission is "R (reverse)", processing of the routine of the back mode is performed in step S11, and the screen arrangement shown in FIG. 4 is selected for the wide screen 30 of the display 3. When it is determined that the shift position of the automatic transmission is not "R (reverse)" in step S3, it is determined in step S4 whether or not the vehicle is at a predetermined speed or slower (for example, equal to or less than15 Km/h) except a zero speed or a substantially zero vehicle speed (for example, equal to or less than a few Km/h), that is, at a low speed. When it is at a low speed, processing of the routine of the low speed traveling mode is performed in step S12, and the screen arrangement shown in FIG. 5 is selected for the wide screen 30 of the display 3

When it is determined in step S4 that the vehicle is not at the predetermined speed or slower, that is, a low speed, it is determined in step S5 whether it is at a speed higher than a predetermined speed (for example, equal to or more than 30 Km/h). When it is at a higher speed, processing of the routine of the high speed traveling mode is performed in step S 13, and the screen arrangement shown in FIG. 6 is selected for the wide screen 30 of the display 3. When it is determined in step S5 that it is not at a speed higher than the predetermined speed, it is determined in step S6 whether or not the vehicle speed is zero or substantially zero (for example, equal to or less than a few Km/h). When the vehicle speed is not zero or substantially zero in step S6, it is determined in step S7 whether or not the brake is pressed down and the brake switch is turned on. When the brake switch is not turned on, it means that ordinary traveling is performed. Thus, processing of the routine of the traveling mode is performed in step S 14, and the screen arrangement shown in FIG. 7 is selected for the wide screen 30 of the display 3.

When it is determined in step S6 that the vehicle speed is zero or substantially zero, and it is determined in step S7 that the brake is pressed down and the brake switch is turned on, it is determined in step S8 whether the shift position of the automatic transmission is "P (parking)" or not. When the shift position is "P (parking)", it is determined in step S9 whether the parking brake is applied or not by turning on of the parking brake switch. When it is determined in step S9 that the parking brake is not applied, processing of the routine of the temporary stop (short time) mode is performed in step S 15, and the screen arrangement shown in FIG. 8 is selected for the wide screen 30 of the display 3. Further, when the parking brake is applied, processing of the routine of the temporary stop (long time) mode is performed in step S16, and the screen arrangement shown in FIG. 9 is selected for the wide screen 30 of the display 3.

In this manner, after performing one of the mode settings in the step S 10 to step S 16, it is determined in step S20 whether or not there is a change in the driving state of the vehicle. When there is no change in the driving state of the vehicle, the system exists from this routine. When it is determined in step S20 that there is a change in the driving state of the vehicle, it is determined in step S21 whether light is lit or not which is a setting requirement of priority. When the light is lit, the position of the screen is modified according to the priority thereof in step S22.

Specifically, when the low speed traveling mode of step S12 is selected in step S4, when the high speed traveling mode of step S13 is selected in step S5, and when the traveling mode of step S 14 is selected in step S6, the screen 31 of the wide screen 30 of them is set to the night vision screen 303 in step S22 and step S23, the screens displayed on the screen 31 and screen 32 are shifted, and the screen arrangement showing the traveling mode shown in FIG. 7 as the night vision priority mode shown in FIG 10 on the wide screen 30 of the display 3 is selected.
The same applies to the case where the low speed traveling mode or the high speed traveling mode is selected.

Next, when there is an incoming call on a car phone via the hands-free device 84 of a car phone in step S24, the screen 33 is changed with priority to the hands-free transmitting/receiving screen 306 commonly in each mode in step S25. Specifically, for example, when entering in the hands-free priority mode while it is in the low speed traveling mode shown in FIG. 5, the wide screen 30 of the display 3 turns to the screen arrangement shown in FIG. 11.
Then, it is determined in step S26 whether or not the vehicle speed is at 5 Km/h or slower for example, and when the vehicle speed is at 5 Km/h or slower, the navigation search control screen 301 of the screen 32 of the low speed traveling mode is set to the screen 33 in step S27, and the blind corner monitor screen 305 is set to the screen 32. That is, when entering the blind corner priority mode while it is in the low speed traveling mode shown in FIG. 5, the wide screen 30 of the display 3 turns to the screen arrangement shown in FIG. 12.

Next, the screen position to be output as the multi-screen display device set in each mode is modified in its arrangement and output by the program of FIG. 15.
There is selected one of the back mode in step S11, the low speed traveling mode in step S12, the high speed traveling mode in step S13, the traveling mode in step S14, the temporary stop (short time) mode in step S 15, and the temporary stop (long period) mode in step S16. Furthermore, necessity of modification is determined with priority for the display screen selected in each mode in step S21, step S24, step S26, and the system enters processing of the routine from step S31 to step S40.

In step S31, it is determined whether the arrangement of the "screen 1" 31 is changed with priority by another requirement, and when there is no requirement to be changed with priority by step S21 to step S23, the image display set in the low speed traveling mode in step S12, the high speed traveling mode in step S 13, or the traveling mode in step S 14 is processed in step S32 to be outputted. Further, when there is a requirement to be changed with priority, the display of the "screen 1" 31 is changed with priority in step S33 to the night vision screen 303 according to step S22 and step S23.
Further, in step S34, it is determined whether the arrangement of the "screen 2" 32 is changed with priority by another requirement, and when there is no requirement to be changed with priority by step S26 and step S27, the image display set in the low speed traveling mode in step S12 is processed in step S35 to be outputted. Further, when there is a requirement to be change with priority, the display of the "screen 2" 32 is changed with priority in step S36 to the blind corner monitor 305 according to step S27.

Then in step S37, it is determined whether the arrangement of the "screen 3" 33 is changed with priority by another requirement, and when there is no requirement to be changed with priority by step S24 and step S25, the image display set in each mode is processed in step S38 to be outputted. Further, when there is a requirement to be changed with priority, the display of the "screen 3" 33 is changed with priority in step S39 to the hands-free transmission/reception screen 306 according to step S25.
In step S40, images of the "screen 1" 31, the "screen 2" 32, and the "screen 3" 33 modified respectively are combined so as to match with the wide screen 30, thereby making respective image display outputs in the wide screen 30.

In step S1, whether it is in the manual mode or not is determined. When the manual mode is selected from the operation unit 2, the system enters processing of the routine from and after step S51 shown in FIG. 16.
In the manual mode, which one of the navigation search control screen 301, the navigation map screen 302, the night vision screen 303, the back guide monitor screen 304, the blind corner monitor screen 305, and the hands-free transmission/reception screen 306 should be selected as the "screen 1" 31 in step S51 is determined in step S52. Further, which one of the navigation search control screen 301, the navigation map screen 302, the night vision screen 303, the back guide monitor screen 304, the blind corner monitor screen 305, and the hands-free transmission/reception screen 306 should be selected as the "screen 2" 32 in step S53 is determined in step S54. Then, which one of the navigation search control screen 301, the navigation map screen 302, the night vision screen 303, the back guide monitor screen 304, the blind corner monitor screen 305, and the hands-free transmission/reception screen 306 should be selected as the "screen 3" 33 in step S55 is determined in step S56.
Then in step S57, images of the "screen 1" 31, the "screen 2" 32, and the "screen 3" 33 modified respectively are combined so as to match with the wide screen 30, thereby making respective image display outputs in the wide screen 30.

Note that in the above embodiment, as selecting requirements of the navigation search control screen 301, the navigation map screen 302, the night vision screen 303, the back guide monitor screen 304, the blind corner monitor screen 305, and the hands-free transmission/reception screen 306, there are performed determination of elapsing of one minute since the engine is started in step S2, determination of reversing of the automatic transmission in step S3, determination of vehicle speed in step S4 to step S6, determination of brake operation in step S7 and determination of parking position of the automatic transmission in step S8, and determination of parking brake operation in step S9, to thereby determine the various types of the display modes. However, when the present invention is carried out, it is possible to highly reliably determine whether it is a stop at a signal or not from the traveling speed of the vehicle in the past by the vehicle speed sensor 7g, the traveling stop position of the vehicle in the navigation map screen 302, and a steering amount by the steering sensor 7d. Further, it is also possible to learn from histories of waiting at a signal in the past to thereby estimate the vehicle stop time.

Also, it is possible to turn the blind corner monitor screen 305 to an operation state with priority when approaching a narrow three-forked road or intersection by the navigation map screen 302.
Then in the above embodiment, as the various measurements screen 307, there is explained the screen showing only the measurement display screen constituted of the display of an inter-vehicle distance for recognizing a preceding vehicle by a radar and maintaining the inter-vehicle distance according to the speed. However, when the present invention is carried out, it is possible that, during low speed traveling, the various measurements device 85 which performs measurement display of measuring instruments such as a speedometer and display of a numeric expression and a character expression or the like of an inter-vehicle distance is one screen of the wide screen 30, and the position of displaying the screen can be changed or erased as necessary.

Furthermore, the driver's habits of day-to-day operation can be learned, and the screen display of the wide screen 30 can be replaced or its arrangement can be changed according to these habits. Particularly, in the case of the operation screen, it is necessary to comply with eyesight, to which can be responded by an enlarging function of characters and a display position thereof.
Especially, in the case of the hands-free transmission/reception screen 306, it is also possible to organize the telephone directory function according to the number of times it is used.

As described above, the multi-screen display device of the embodiment of the present invention includes the multi display screen constituted of the wide-screen 30 displaying simultaneously two or more of the navigation search control screen 301 setting necessary requirements to search for a route from a place of departure to a destination of the vehicle, the navigation map screen 302 displaying the position of the vehicle on the map, the night vision screen 303 recognizing an object on the road at night by infrared, the back guide monitor screen 304 for recognizing a rear side of the vehicle, the blind corner monitor screen 305 for recognizing an orthogonal direction of the vehicle, and the hands-free transmission/reception screen 306 for a hands-free transmission/reception device of a car phone. The multi-screen display device also includes the control circuit which has at least the image selection DB unit 94, the screen position determining unit 95 and the arithmetic and control unit 1 for selecting a screen to be displayed on the multi-display screen constituted of the wide screen 30 according to a vehicle driving state detected in the vehicle driving state detecting unit 7 and determining for the selected screen a display position in the multi-display screen constituted of the wide screen 30 according to the vehicle driving state detected in the vehicle driving state detecting unit 7, and executes the program of FIG. 13 to FIG. 16.

Further, the embodiment of the present invention can be a program of a multi-screen display device displaying simultaneously on a multi-display screen at least two or more of various screens of a navigation device, various imaging screens of cameras imaging the outside of the vehicle, and various screens of a hands-free transmission/reception device of a car phone, switching a screen displayed on the multi-display screen according to a vehicle driving state, and changing an arrangement of selected screens displayed on the multi-display screen according to the vehicle driving state.
Here, the multi-display screen constituted of the wide screen 30 of this embodiment can be a single wide screen or can be a display screen in which several screens are arranged. Further, the control circuit constituted of the image selection DB unit 94 and the screen position determining unit 95 which determine a display of the multi-display screen and the arithmetic and control unit 1 may be one including at least a function to select an image and a screen position determining function.
The multi-display screen is constituted of the wide screen 30 displaying simultaneously two or more screens. When the multi-display screen displaying two or more of various screens of a navigation device, various imaging screens of cameras imaging the outside of the vehicle, and the hands-free transmission/reception screen of a car phone is outputted, the control circuit determines a display position which is needed to be displayed on the multi-display screen according to the vehicle driving state.

Here, The multi-display screen can be identified from the navigation search control screen 301, the navigation map screen 302, the night vision screen 303, the back guide monitor screen 304, the blind corner monitor screen 305, and the hands-free transmission/reception screen 306, which are screens of functions which are normally used, and the measurements screen 307 showing a screen of measuring instruments constituted of one of a screen of measuring instruments such as a speedometer and/or an inter-vehicle distance display for recognizing a preceding vehicle by a radar and maintaining an inter-vehicle distance according to the speed, and so on. When the present invention is carried out, an arbitrary combination of the above screens is possible. Further, the navigation search control screen 301 and the navigation map screen 302 may either be a one-screen display or a two-screen display.

Further, the control circuit is constituted of the arithmetic and control unit 1, the operation unit 2, the imaging unit 5, the various sensors of the vehicle driving state detecting unit 7, the communication unit 6, and the various detection devices unit 8 and determines a screen needed as the multi-display screen according to a traveling state. A screen which is needed to be displayed on the multi-display screen is determined based on one or more state determinations out of a determination of traveling and stop of traveling of the vehicle, a vehicle speed determination, a determination of a lighting state of a light, a range position determination of the shift lever, an operation determination of the parking brake, and a hands-free transmission/reception determination of a car phone, which are the determinations of the vehicle driving state detected in the vehicle driving state detecting unit 7. However, when the present invention is carried out, information of the navigation map screen 302 or the like can be used, and histories can be used as well.

Therefore, a screen displayed on the multi-display screen constituted of the wide screen 30 is selected according to the traveling state of the vehicle detected in the vehicle driving state detecting unit 7, and for the selected screen thereof, a display position of the multi-display screen constituted of the wide screen 30 is determined according to the traveling state. Thus, for example, one which is frequently used by the driver according to the driving state is set to a display position close to the driver, and the visibility thereof can be increased. Further, by performing weighting on the multi-display screen constituted of the wide screen 30 according to the driving state, a screen display with a different scale size, a two-dimensional map, or a three-dimensional map can be displayed even in the navigation map screen, and in a complicated alley, the blind corner monitor screen 305 is displayed, thereby making it possible to provide information demanded by the driver as an output matched with the vehicle driving state. Thus, one that is frequently recognized according to the driving state of the driver can be arranged at a display position close to the driver according to the driving state of the driver to thereby improve visibility thereof, and operability can be improved for one using a touch switch.

Further, a determination according to the vehicle driving state detected in the vehicle driving state detecting unit 7 of the multi-screen display device of this embodiment is based on one or more state determinations out of a determination of traveling on a road by the navigation function, a determination of stop of traveling of the vehicle, a vehicle speed determination, a determination of a lighting state of a light, a range position determination of the shift lever, a determination of an operation state of the parking brake, and a hands-free transmission/reception determination of a car phone.
Therefore, with them, an optimum screen arrangement according to a vehicle driving state detected in the vehicle driving state detecting unit 7 can be obtained according to a condition that is sufficient to change the display state.

Then the control circuit including a function to select a screen and a screen position determining function of the multi-screen display device of the embodiment of the present invention, estimates a vehicle stop time by a determination of traveling on a road by the navigation function, a determination of stop of traveling of the vehicle, a range position determination of the shift lever, and a determination of a vehicle speed state and an operation state of the parking brake, and determines a screen needed to be displayed on the multi-display screen constituted of the wide screen 30 and a display position on the multi-display screen constituted of the wide screen 30.
Therefore, for example, the vehicle speed decreases gradually, and a determination of application of the parking brake in a traveling state on a road as a vehicle driving state detected in the vehicle driving state detecting unit 7 means a stop of traveling for a long time. Further, a sudden stop of traveling of the vehicle means a stop at a signal by a change of the signal, and the navigation search control screen 301 can be moved to a position where it can be operated easily assuming a stop at the signal for one to three minutes. Of course, a vehicle stop time thereof can be estimated by information of POI such as a position of an intersection, a certain shop, and so on of the navigation map screen 302.

Furthermore, the control circuit including a function of selecting a screen and a screen position determination function of the multi-screen display device of the embodiment of the present invention learns an operation by the driver while driving as a vehicle driving state detected in the vehicle driving state detecting unit 7, and thereby determines a display screen with respect to the multi-display screen constituted of the wide screen 30. Thus, a screen arrangement considering the driver's behavior can be provided, and it becomes a screen which can be easily recognized and handled by the driver.

Moreover, for a determination according to the vehicle driving state detected in the vehicle driving state detecting unit 7 of the multi-screen display device of the embodiment of the present invention, when a navigator is riding together on a passenger seat, the navigation search control screen or the navigation map screen is displayed on the display screen on the passenger seat side separated farthest from the driver. Thus, when a navigator is riding together, the navigation search control screen 301 and the navigation map screen 302 can be positioned on the passenger seat side of the "screen 3" 33 by manual setting so as to alleviate the burden to the driver.

In addition, to the multi-display screen constituted of the wide screen 30 displaying two or more screens, there is further added a measurement display screen constituted of one of a display of measuring instruments such as a speedometer and/or an inter-vehicle distance display for recognizing a preceding vehicle by a radar and maintaining an inter-vehicle distance according to the speed. Therefore, for entering a garage or at a parking area, it is possible to provide a screen arrangement in which the blind corner monitor screen 305 and the back guide monitor screen 304 are regarded more important than measuring instrument related ones. Further, in the multi-display screen constituted of the wide screen 30 having a screen display with two to five screens, necessary information according to a vehicle driving state detected in the vehicle driving state detecting unit 7 can be obtained. When the present invention is carried out, it is preferable that four to five screens are used when one screen of the measurements screen 307 is used by the various measurements device 85 which performs measurement display of measuring instruments such as a speedometer and display of a numeric expression of an inter-vehicle distance and a character expression or the like, and it is preferable that two to four screens are used when one screen is not used as the measurements screen 307.

In the navigation map screen 302 of the multi-screen display device of the embodiment of the present invention, the different navigation map screen 302 is used. Thus, a map demanded by the driver can be extracted from the certain screen being displayed without changing the scale size thereof.
Particularly, use of the different navigation map screen 302 is of screens having a different scale size and/or a two-dimensional or three-dimensional map screen. Thus, regarding a traveling direction or the like at an intersection with low visibility, a road can be identified easily by a screen having a different scale size and/or a two-dimensional or three-dimensional map screen, a time for the driver to confirm the navigation map screen 302 can be shortened.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A multi-screen display device, comprising:
a multi-display screen (30) is adapted to display simultaneously two or more of various
screens (301) of a navigation device, various imaging screens (303, 304, 305) of a camera (5) imaging an outside of a vehicle, and various screens (306) of a hands-free transmission/reception device (84) of a car phone; and
a control circuit (1, 94, 95) is adapted to select screens displayed on the multi-display screen (30) according to a vehicle driving state and is adapted to determine an arrangement of the selected screens on the multi-display screen (30) according to the vehicle driving state.

2. The multi-screen display device according to claim 1, wherein
a determination according to the vehicle driving state is based on one or more state determinations out of a determination of traveling on a road by a navigation function, a determination of stop of traveling of the vehicle, a vehicle speed determination, a determination of a lighting state of a light, a range position determination of a shift lever, a determination of an operation state of a parking brake, and a hands-free transmission/reception determination of a car phone.

3. The multi-screen display device according to claim 1 or claim 2, wherein
the control circuit (1, 2, 5, 7, 6, 8), in which a determination of traveling on a road is performed by the navigation function, is adapted to estimate a vehicle stop time by a determination of stop of traveling of the vehicle, a range position determination of a shift lever, a determination of a vehicle speed state and an operation state of a parking brake, and determines a screen needed to be displayed on the multi-display screen (30) and a display position on the multi-display screen (30).

4. The multi-screen display device according to any one of claim 1 to claim 3, wherein
the control circuit (1, 2, 5, 7, 6, 8) is adapted to learn an operation by a driver while driving as the vehicle driving state, and thereby determines a display screen with respect to the multi-display screen (30).

5. The multi-screen display device according to any one of claim 1 to claim 4, wherein
in a determination according to the vehicle driving state, when a navigator rides together in a passenger seat, a navigation search control screen (301) or a navigation map screen (302) is displayed on a display screen on a passenger seat side separated farthest from the driver.

6. The multi-screen display device according to any one of claim 1 to claim 5, wherein
a measurement display screen (307) constituted of one of a display of measuring instruments such as a speedometer and/or an inter-vehicle distance display for recognizing a preceding vehicle by a radar and maintaining an inter-vehicle distance according to the speed is adapted to be further added to the multi-display screen (30).

7. The multi-screen display device according to any one of claim 1 to claim 6, wherein
the multi-display screen (30) is adapted to have two to five screen displays.

8. The multi-screen display device according to any one of claim 1 to claim 7, wherein
in the navigation map screen (302), a different navigation map screen (302) is used.

9. The multi-screen display device according to claim 8, wherein
the use of the different navigation map screen (302) is of screens having a different scale size and/or a two-dimensional or three-dimensional map screen.

10. A program of a multi-screen display device that comprises program code which, when run on a computer, causes the computer to perform:
displaying on a multi-display screen (30) simultaneously at least two or more of various screens of a navigation device (301, 302), various imaging screens (303, 304, 305) of a camera (5) imaging an outside of a vehicle, and various screens (306) of a hands-free transmission/reception device (84) of a car phone; and
switching screens displayed on the multi-display screen (30) according to a vehicle driving state and changing an arrangement of selected screens displayed on the multi-display screen (30) according to the vehicle driving state.
